**Europäisches Patentamt**

**European Patent Office**

**Office européen des brevets**

(19)

(11) Veröffentlichungsnummer: **0 141 166**
**B1**

(12) **EUROPÄISCHE PATENTSCHRIFT**

(45) Veröffentlichungstag der Patentschrift:
14.12.88

(51) Int. Cl.⁴: **H 02 H 7/08**

(21) Anmeldenummer: **84110676.8**

(22) Anmeldetag: **07.09.84**

(54) Schaltanordnung für Elektrowerkzeuge.

(30) Priorität: **10.09.83 DE 3332790**

(43) Veröffentlichungstag der Anmeldung:
**15.05.85 Patentblatt 85/20**

(45) Bekanntmachung des Hinweises auf die Patenterteilung:
**14.12.88 Patentblatt 88/50**

(84) Benannte Vertragsstaaten:
**DE GB IT SE**

(56) Entgegenhaltungen:
**EP-A-0 048 793**
**DE-A-2 540 356**
**FR-A-2 517 135**

(73) Patentinhaber: **ROBERT BOSCH GMBH, Postfach 50, D-7000 Stuttgart 1 (DE)**

(72) Erfinder: **Jundt, Wolfgang, Dipl.- Ing. (FH), Glemsstrasse 4, D-7257 Ditzingen 1 (DE)**
Erfinder: **Schädlich, Fritz, Dipl.- Ing. (FH), Panoramastrasse 4, D-7022 Leinfelden-Echterdingen (DE)**

EP 0 141 166 B1

LIBER, STOCKHOLM 1988

## Beschreibung

### Stand der Technik

Die Erfindung geht aus von einem Elektrowerkzeug nach der Gattung des Hauptanspruchs. Elektrowerkzeuge müssen aus Sicherheitsgründen einen mechanischen Ein-Aus-Schalter besitzen. Weist nunmehr das Elektrowerkzeug eine vorgeschaltete Elektronik auf, die das Werkzeug über schaltbare Halbleitervorrichtungen, wie Thyristoren oder Triacs, selbsttätig mit Netzspannung versorgt, so benötigt die Elektronik eine Rückmeldung, ob der Ein-Aus-Schalter ausgeschaltet wurde, nachdem durch die Elektronik die Netzspannung unterbrochen wurde. Dies ist notwendig, um die Triacs in der Elektronik wieder neu zu zünden, damit das Werkzeug wieder mit dem Ein-Aus-Schalter neu gestartet werden kann. Dies ist beispielsweise bei elektronisch gesteuerten Schraubvorrichtungen der Fall. Nach Beendigung des Schraubvorganges schaltet die Elektronik den Schrauber ab, ohne daß der mechanische Schalter abgeschaltet werden muß. Bei den bekannten Vorrichtungen werden nunmehr die Triacs eine bestimmte Zeit stromlos gehalten. In dieser Zeit muß der Bediener den Ein-Aus-Schalter ausschalten. Nach Beendigung dieser Zeit schaltet die Elektronik die Triacs wieder ein. Hat nunmehr der Bediener des Werkzeuges vergessen, den mechanischen Schalter zu betätigen, kann dies leicht zu Unfallen führen, wenn die Elektronik nach Ablauf der Ruhezeit die Triacs wieder zündet und damit überraschend das Elektrowerkzeug wieder einschaltet.

Aus der FR-A-2 517 135 ist bereits bekannt, die von der Steuervorrichtung unabhängige elektrische Spannung hinter einer mechanischen Schaltvorrichtung zu erfassen und mit der netzseitigen Spannung zu vergleichen. Bei Gleichheit wird über ein Monoflop bzw. Flip-Flop auf eine Motorsteuerschaltung eingewirkt, die bei vorherigem Netzausfall und eingerasteter mechanischer Schaltvorrichtung ein Zünden des Triacs bleibend verhindert.

Dadurch wird das Unfallrisiko durch den Wiederanlauf des Elektrowerkzeugs vermieden, wenn das Netzkabel der Netzspannung eingesteckt und die mechanische Schaltvorrichtung eingerastet ist.

### Vorteile der Erfindung

Das erfindumgsgemäße Elektrowerkzeug mit den kennzeichnenden Merkmalen des Hauptanspruchs hat demgegenüber den Vorteil, daß mit einem verhältnismäßig geringen elektronischen Zusatzaufwand und ohne weitere mechanische Schaltvorrichtungen nach Abschalten des Arbeitsvorgangs wie beispielsweise des Schraubvorgangs eines Schraubers durch die Steuervorrichtung, ein Zünden der elektrischen Steuerschalter bzw. ein Wiederanlauf des Elektrowerkzeugs verhindert wird, wenn die mechanische Schaltvorrichtung nicht zuvor ausgeschaltet wurde. Auf diese Art und Weise ist es auf einfache Weise möglich, ein Wiederanlaufen des Elektrowerkzeuges zu verhindern, wenn nicht zuvor das Gerät mechanisch ausgeschaltet wurde.

Durch die in den Unteransprüchen aufgeführten Maßnahmen sind vorteilhafte Weiterbildungen und Verbesserungen des in Hauptanspruch angegebenen Elektrowerkzeuges möglich. Vorteilhaft ist, den Gleichrichter als Spitzenwertgleichrichter auszubilden. Durch diese Maßnahme wird erreicht, daß einerseits eine hohe Schaltspannung zur Verfügung steht und andererseits durch die integrierende Wirkung des Kondensators Störimpulse keine Fehlschaltungen verursachen. Des weiteren ist dadurch eine gewisse Schalthysterese erreichbar, so daß ein "wildes Schalten" vermieden wird. Günstig ist es auch, dem Gleichrichter einen Komparator nachzuschalten, dessen Ausgang auf die Ansteuerschaltung einwirkt. Einerseits wird durch diese Maßnahme eine Pegelanpassung erzielt, so daß bei der Ansteuerschaltung keinerlei Veränderungen getroffen werden müssen, andererseits ist dadurch ein besonders sicheres Schaltverhalten gegeben, da die Schaltschwellen des Komparators im engen Rahmen vorgebbar sind.

### Zeichnung

Zwei Ausführungsbeispiele der Erfindung sind in der Zeichnung dargestellt und in der nachfolgenden Beschreibung näher erläutert. Es zeigen

Figur 1 ein erstes Ausführungsbeispiel der Erfindung,
Figur 2 ein Impulsdiagramm zur Erläuterung der Funktionsweise des ersten Ausführungsbeispieles,
Figur 3 ein zweites Ausführungsbeispiel der Erfindung und
Figur 4 ein Funktionsdiagramm zur Erläuterung der Funktion der Schaltungsanordnung nach Figur 3.

### Beschreibung der Ausführungsbeispiele

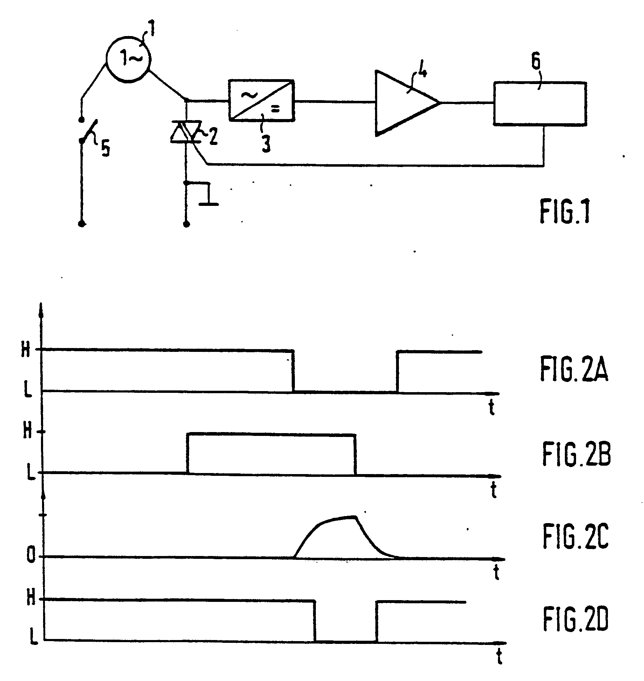

In Figur 1 ist mit 1 ein Einphasenelektromotor dargestellt, wie er beispielsweise bei Elektrowerkzeugen Verwendung findet. Der Elektromotor 1 ist mit einem Anschluß über einen mechanischen Schalter 5 mit der Netzspannung verbunden. Der zweite Anschluß des Elektromotors 1 führt zu einem Triac 2 dessen weiterer Eingang beispielsweise mit dem Null-

Leiter des Stromversorgnngsnetzes verbunden ist. Zwischen Elektromotor 1 und Triac 2 führt eine Leitung zu einem Spitzenwertgleichrichter 3, dem ein Komparator 4 nachgeschaltet ist. Der Ausgang des Komparators 4 führt zu einer Ansteuerschaltung 6, die an ihrem Ausgang ein Signal für die Steuerelektrode des Triacs 2 abgibt.

Die Ansteuerschaltung 6 dient zur Abgabe von Zündimpulsen für den Triac 2. Die Ansteuerschaltung 6 kann in bekannter Art und Weise beliebig ausgebildet sind. Dient der Elektromotor 1 beispielsweise dazu, einen elektrischen Schrauber zu steuern, so ist ein Beispiel der Ansteuerschaltung der deutschen Patentanmeldung 3 236 033 zu entnehmen. Die Funktionsweise der Schaltungsanordnung ist anhand des Diagramms nach Figur 2 näher erläutert. In Figur 2a ist der Zustand des Triacs 2 dargestellt. Ein H-Signal bedeutet, daß der Triac leitend geschaltet ist. Ein L-Signal bedeutet, daß der Triac 2 gesperrt ist. Figur 2b zeigt den Zustand des Schalters 5. Ein H-Signal zeigt an, daß der Schalter 5 geschlossen ist, während ein L-Signal einen geöffneten Schalter repräsentiert. Ist der Schalter 5 geöffnet und der Triac 2 durch die Ansteuerschaltung 6 gezündet, so liegt am Ausgang des Gleichrichters 3 eine Spannung von 0 Volt. Dies ist in Figur 2c dargestellt. Wird nun, wie dies in Figur 2b erkennbar ist, der Schalter 5 geschlossen, so bleibt die Spannung am Ausgang des Gleichrichters auf 0 Volt. Wird nunmehr der Triac 2 hochohmig, da die Ansteuerimpulse der Ansteuerschaltung 6 ausbleiben, so wird dadurch der Motor 1 ausgeschaltet. In Figur 2a ist dies durch den Übergang von H nach L erkennbar. Bleibt nunmehr der Schalter 5 geschlossen, so steigt die Spannung am Ausgang des Gleichrichters 3 an, wie dies in Figur 2c dargestellt ist. Der Spitzenwertgleichrichter 3 lädt sich auf den Spitzenwert der Netzspannung auf.

Ist ein bestimmter Spannungswert am Ausgang des Spitzenwertgleichrichters 3 überschritten, so schaltet Komparator 4 von seinem logischen H-Pegel auf L-Pegel um. Dies ist in Figur 2d erkennbar. Durch den L-Pegel am Ausgang des Komparators 4 ist die Ansteuerschaltung 6 für die Abgabe weiterer Triggerimpulse gesperrt. Dies bedeutet jedoch, daß der Triac 2 nicht mehr gezündet werden kann. Wird nunmehr der Schalter 5 geöffnet, was in Figur 2b durch den Übergang von H auf L erkennbar ist, so fällt die Spannung am Ausgang des Gleichrichters 3 auf 0 Volt ab. Dies hat zur Folge, daß sich auch der Ausgangszustand des Komparators 4 ändert, der mit seinem Ausgang auf H schaltet. Mit der ansteigenden Flanke am Ausgang des Komparators 4, die in Figur 2d dargestellt ist, kann der Triac 2 wiederum durch die Ansteuerscha'tung 6 gezündet werden, und die Schraubvorrichtung ist für den Bediener wieder betriebsbereit. Diese Schaltungsanordnung ist ohne Schwierigkeiten auch bei Dreiphasenelektromotoren einsetzbar. Hierbei ist in jeder Phase ein Triac und ein mechanischer Schalter anzuordnen. Es genügt jedoch, wenn an der geerdeten Phase der Gleichrichter 3 angeschlossen ist.

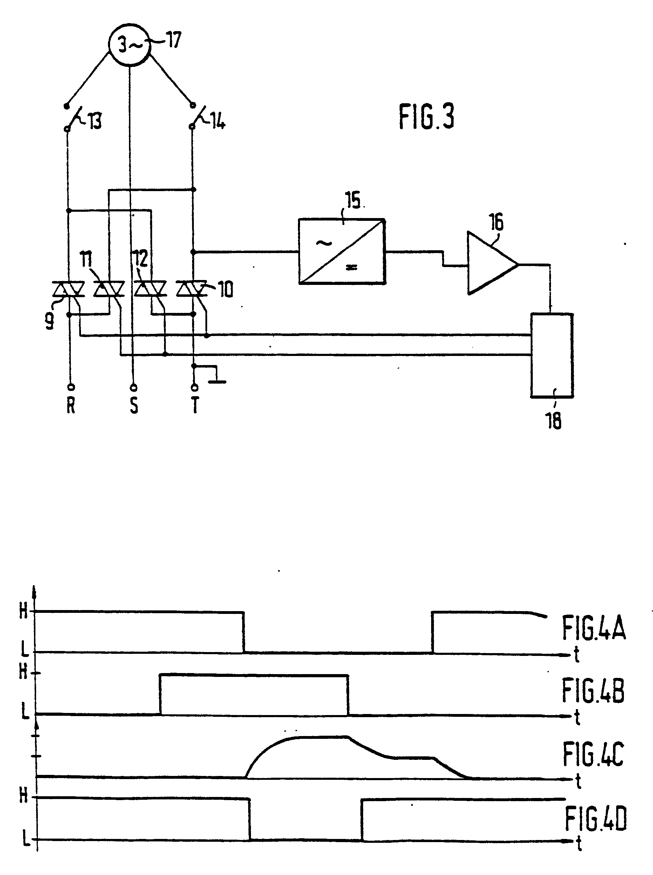

In Figur 3 ist ein Dreiphasenelektromotor 17 dargestellt, der ebenfalls wiederum zum Antrieb eines Elektrowerkzeuges, vorzugsweise eines Schraubers dient. Während eine Phase S des Elektromotors 17 direkt mit der Netzspannung verbunden ist führen die beiden weiteren Phasenanschlüsse des Motors zu jeweils einem Schalter 13 und 14, wobei die Schalter 13 und 14 gemeinsam bedienbar sind. Dem Schalter 13 folgt ein Triac 9, an dessen weiterem Anschluß die Phase R angeschlossen ist. Des weiteren ist ein Triac 12 angeschlossen, der an die andere Phase T der Netzspannung führt. Vom Ausgang des Schalters 14 führt jeweils ein Triac 11 zu der Phase R, während ein Triac 10 gemeinsam mit dem Triac 12 an die Phase T angeschlossen ist, die geerdet ist. Die Schalter 13, 14 können beliebig in Phasen R, S oder S, T oder T, R angebracht sein. Für die Schalterabfrage ist nur wichtig, daß die Spannung über einem beliebigen Triac abgefragt wird. Zwischen Schalter 14 und Triac 10 ist ein Spitzenwertgleichrichter 15 angeschlossen, dessen Ausgang zu einem Komparator 16 führt. Der Ausgang des Komparators 16 steht mit einer Ansteuerschaltung 18 in Verbindung. Die Ansteuerschaltung 18 weist zwei Ausgänge auf, wobei der eine Ausgang mit den Triacs 3 und 10 und der andere Ausgang mit Triacs 11 und 12 verbunden ist. Durch die Anordnung der Triacs 9 bis 12 in einer Brückenschaltung ist diese Schaltungsanordnung für eine Drehrichtungsumkehr des Motors 17 geeignet.

Durch die Brückenanordnung ergeben sich andere Verhältnisse am Ausgang des Gleichrichters 15, die anhand der Figur 4 näher erläutert sind. Schalten beispielsweise die Triacs 9 und 10 den Motor ab, wie dies in Figur 4a erkennbar ist, und bieiben entsprechend Figur 4b die Schalter 13 und 14 geschlossen, so steigt entsprechend Figur 4c die Spannung am Ausgang des Gleichrichters 15 auf den Spitzenwert der Nennspannung an. Der Ausgang des Komparators 16 schaltet auf einen logischen L-Pegel und sperrt damit die Ansteuerschaltung 18, so daß diese weder die Triacpaare 9 und 10 noch die Triacpaare 11 und 12 zünden kann. Werden die Schalter 13 und 14 geöffnet, so fällt die Spannung am Ausgang des Komparators 15 auf die halbe Versorgungspannung ab. Die halbe Versorgungspannung ist dadurch bedingt, daß alle Triacs zwar gesperrt sind, aber einen hochohmigen Spannungsteiler der Netzspannung bilden. Der Komparator 16 muß daher auf eine Schaltschwelle zwischen der Spitzenspannung der Nennspannung und der halben Spitzenspannung der Nennspannung eingestellt werden, um ein Öffnen der Schalter 13 und 14 zu erkennen. Wie die Figur 4c erkennen läßt, wird daher kurz vor Erreichen der halben Betriebsspannung das Ausgangssignal des

Komparators 16 wiederum auf den Pegel H gehoben, so daß die Ansteuerschaltung je ein Triacpaar zünden kann.

Durch diese Schaltungsmaßnahme ist auf einfache Art und Weise die Schalterstellung des mechanischen Schalters erkennbar, ohne daß ein zusätzlicher Schalter oder zusätzliche Steuerleitungen notwendig wären. Eine Unfallgefahr durch ungewolltes Einschalten des Elektrowerkzeuges besteht nicht.

Die Schaltungsanordnungen sind nicht auf Schraubervorrichtungen beschränkt. Beispielsweise ist es auf diese Art und Weise möglich, elektrische Handwerkzeuge, wie Bohrmaschinen, Sägen und Schwingschleifer zu schützen, die von der elektronischen Ansteuerschaltung abgeschaltet werden, beispielsweise weil der Elektromotor zulässige maximale Temperaturwerte überschritten hat. Eine Inbetriebnahme des Elektromotors wird erst dann wieder möglich, wenn der mechanische Schalter ausgeschaltet ist. Als sperrbare elektronische Ansteuerschaltung ist dabei beispielsweise die integrierte Schaltung CD 4013 der Firma RCA geeignet, an deren Takteingang der Komparator 4, 16 anschließbar ist, während der D-Eingang auf "High" liegt. Das Abschaltsignal wird dynamisch an den Rücksetzeingang gelegt.

**Patentansprüche**

1. Elektrowerkzeug, insbesondere handgeführte Schraubvorrichtung, mit einer mechanischen Schaltvorrichtung (5; 13, 14), einer elektrischen Steuervorrichtung (2; 9, 10, 11, 12), vorzugsweise mittels Thyristoren oder Triacs, einer dieser vorgeschalteten elektrischen Ansteuerschaltung (6; 18) und einem spannungserfassenden Gleichrichter (3; 15), durch dessen Ausgangssignal die Ansteuerschaltung (6; 18) verriegelbar ist, dadurch gekennzeichnet, daß der Gleichrichter (3; 15) die Spannung über der Steuervorrichtung (2; 9, 10, 11, 12) erfaßt.

2. Elektrowerkzeug nach Anspruch 1, dadurch gekennzeichnet, daß der Gleichrichter (3; 15) als Spitzenwertgleichrichter ausgebildet ist.

3. Elektrowerkzeug nach Anspruch 1 oder Anspruch 2, dadurch gekennzeichnet, daß dem Gleichrichter (3; 15) ein Komparator (4; 16) nachgeschaltet ist, dessen Ausgang auf die Ansteuerschaltung (6; 18) wirkt.

**Claims**

1. Electrical tool, in particular a hand-held screwing device, having a mechanical switching device (5; 13, 14), an electric control device (2; 9, 10, 11, 12), preferably by means of thyristors or triacs, a preceding electric drive circuit (6; 18) and a voltage-detecting rectifier (3; 15) by means of the output signal of which the drive circuit (6; 18) can be interlocked, characterized in that the rectifier (3; 15) detects the voltage via the control device (2; 9, 10, 11, 12).

2. Electrical tool according to Claim 1, characterized in that the rectifier (3; 15) is constructed as a peak value rectifier.

3. Electrical tool according to Claim 1 or Claim 2, characterized in that the rectifier (3; 15) is followed by a comparator (4; 16) the output of which acts on the drive circuit (6; 18).

**Revendications**

1. Outil électrique, notamment dispositif de vissage guidé manuellement, avec un dispositif mécanique de commutation (5; 13, 14), un dispositif électrique de commande (2; 9, 10, 11, 12), de préférence au moyen de thyristors ou de triacs, un circuit électrique de commande (6; 18) branché en amont de ce dispositif, et un redresseur (3; 15) interceptant la tension et dont le signal de sortie est susceptible de verrouiller le circuit de commande (6; 18), outil électrique caractérisé en ce que le redresseur (3; 15) intercepte la tension par l'intermédiaire du dispositif de commande (2; 9, 10, 11, 12).

2. Outil électrique selon la revendication 1, caractérisé en ce que le redresseur (3; 15) est un redresseur de valeurs de pointe.

3. Outil électrique selon la revendication 1 ou la revendication 2, caractérisé en ce qu'un comparateur (4, 16) est branché à la suite du redresseur (3; 15), la sortie de ce comparateur agissant sur le circuit de commande (6; 18).

FIG.1

FIG.2A

FIG.2B

FIG.2C

FIG.2D

FIG.3

FIG.4A

FIG.4B

FIG.4C

FIG.4D